# EUROPÄISCHE PATENTSCHRIFT

(11) **EP 2 715 133 B1**
(45) Veröffentlichungstag und Bekanntmachung des Hinweises auf die Patenterteilung: **22.07.2020**
(21) Anmeldenummer: 12726775.5
(22) Anmeldetag: 29.05.2012
(51) Int. Cl.: F04B 7/00, F04B 53/10, F16K 31/06

(54) **EINLASSVENTIL FÜR EINE FLUIDPUMPE UND MONTAGEVERFAHREN FÜR EIN EINLASSVENTIL FÜR EINE FLUIDPUMPE**
INLET VALVE FOR A FLUID PUMP AND ASSEMBLY METHOD FOR AN INLET VALVE FOR A FLUID PUMP
CLAPET D'ASPIRATION POUR POMPE À FLUIDE ET PROCÉDÉ DE MONTAGE D'UN CLAPET D'ASPIRATION POUR POMPE À FLUIDE

(30) Priorität: 31.05.2011 DE 102011076784
(43) Veröffentlichungstag der Anmeldung: 09.04.2014
(73) Patentinhaber: Vitesco Technologies GmbH, 30165 Hannover (DE)
(72) Erfinder: VAN HIMME, Luc, B-9270 Laarne (BE); VERMOLEN, Koen, B-2530 Boechout (BE); MEEKERS, Rudi, B-1980 Zemst (BE)
(74) Vertreter: Wohnert, Dietmar
(86) Internationale Anmeldenummer: PCT/EP2012/059990
(87) Internationale Veröffentlichungsnummer: WO 2012/163892

(56) Entgegenhaltungen:
- DE-A1-102005 051 177
- DE-A1-102008 018 018
- DE-B1- 1 550 416
- US-A- 1 210 871
- US-A- 2 744 467
- US-A- 3 459 363
- US-A- 5 197 438
- US-A- 5 957 674
- US-A1- 2003 107 015
- US-A1- 2004 223 856
- US-A1- 2008 279 705
- US-A1- 2009 114 292
- US-B1- 7 036 788

## Beschreibung

Die Erfindung betrifft ein Einlassventil für eine Fluidpumpe. Die Erfindung betrifft ferner ein Montageverfahren für ein Einlassventil für eine Fluidpumpe.

Einlassventile für Benzin- oder Dieselpumpen als solche sind bekannt. Solche Ventile umfassen in der Regel eine Kraftstoffeinlassöffnung und einen Stößel, welcher diese Einlassöffnung verschließen kann. Ferner ist üblicherweise ein Aktor vorgesehen, welcher den Stößel hin- und her bewegen kann. Bei den bekannten Ventilen sind der Aktor und der Stößel fest miteinander verbunden.

Nachteilig an dieser Konstruktion ist insbesondere, dass Aktorbewegungen, welche eine Komponente quer zu einer Längsachse des Stößels aufweisen, dazu führen, dass auch der Stößel Querbewegungen ausführt. Das kann insbesondere dazu führen, dass der Stößel die Einlassöffnung nicht mehr vollständig verschließen kann, da dieser schief in einem entsprechenden Ventilsitz sitzt. Dies kann insofern zu einer höheren Leckagerate führen.

US 1210871 A und DE 1550416 A beschreiben jeweils Ventilanordnungen, bei denen Ventilstößel von einer sich um die Drehachse drehenden Nockenwelle angetrieben werden.

In US 3459363 A ist ein Ventilelement beschrieben, bei dem ein Ventilstößel von einem Magnetaktor angetrieben wird, wobei der Ventilstößel fest mit einem Anker des Magnetaktors verbunden ist.

Die DE 10 2005 051177 offenbart ein Ventil, bei dem die Aktionskraft durch einen Elektromagneten auf einen Anker übertragen wird, welche dann in in das eine Ende des Stößels eingeleitet wird, wobei eine Buchse als Kopplungselement verwendet wird, welches an einem Ende des Stößels nur aufliegt.

Die der Erfindung zugrunde liegende Aufgabe kann daher darin gesehen werden, ein Einlassventil für eine Fluidpumpe zu schaffen, welches die bekannten Nachteile überwindet und eine Leckage vermeidet.

Die der Erfindung zugrunde liegende Aufgabe kann auch darin gesehen werden, ein entsprechendes Montageverfahren für ein Einlassventil für eine Fluidpumpe anzugeben.

Diese Aufgaben werden mittels des jeweiligen Gegenstands der unabhängigen Ansprüche gelöst. Vorteilhafte Ausgestaltungen sind Gegenstand von jeweils abhängigen Unteransprüchen.

Nach einem Aspekt wird ein Einlassventil für eine Fluidpumpe gemäß den Merkmalen des Anspruchs 1 geschaffen. Dadurch, dass der Aktor und der Stößel getrennt voneinander gebildet sind, führt eine Aktorbewegung, welche insbesondere eine Komponente quer zu einer Längsachse des Stößels aufweist, nicht zu einer entsprechenden Querbewegung des Stößels, wenn der Stößel und der Aktor nicht miteinander gekoppelt sind. Ein Verschleiß des Stößels aufgrund dieser unerwünschten Querbewegungen kann somit in vorteilhafter Weise vermieden werden. Der Stößel kann auch als ein Regelstift bezeichnet werden.

Vorzugsweise handelt es sich bei der Fluidpumpe um eine Kraftstoffpumpe, insbesondere eine Benzin- oder Dieselpumpe. Das Fluid ist dann entsprechend ein Kraftstoff, insbesondere Benzin oder Diesel. Das Einlassventil kann insbesondere ein digital kontrolliertes Einlassventil sein. Beispielsweise kann es sich auch um ein integriertes digital kontrolliertes Einlassventil handeln. Integriert bedeutet hier insbesondere, dass das Einlassventil auf einem Zylinder einer Fluidpumpe, insbesondere einer Benzin- oder Dieselpumpe, integriert ist. Da das Einlassventil insbesondere eine Fluidmenge bzw. ein Fluidvolumen regeln kann, kann es insofern auch einen Durchfluss zu einem Einspritzsystem, insbesondere einem Common-Rail-System, regeln. Insofern kann das Einlassventil auch als ein Volumenregelventil bezeichnet werden. Insbesondere kann das Einlassventil als ein stromlos offen digital geschaltetes Ventil gebildet sein. Stromlos offen bedeutet insbesondere, dass, wenn keine Spannung an dem Einlassventil anliegt, der Stößel bzw. der Regelstift sich in einer Offenposition befindet, sodass die Fluideinlassöffnung nicht verschlossen ist.

Gemäß einer Ausführungsform kann das Einlassventil als ein stromlos-offen (SO)-Ventil gebildet sein. Stromlos-offen bedeutet insbesondere, dass, wenn kein Strom oder keine Spannung an dem Einlassventil anliegt, der Stößel bzw. Regelstift sich in einer Offenposition befindet, sodass die Fluideinlassöffnung nicht verschlossen ist.

Gemäß einer weiteren Ausführungsform kann das Einlassventil als ein stromlos-geschlossen (SG)-Ventil gebildet sein. Stromlos-geschlossen bedeutet insbesondere, dass, wenn kein Strom oder keine Spannung an dem Einlassventil anliegt, der Stößel bzw. Regelstift sich in einer Geschlossenposition befindet, sodass die Fluideinlassöffnung verschlossen bzw. geschlossen ist.

Nach einer Ausführungsform ist das Kopplungselement derart gebildet, eine quer zu einer Längsachse des Stößels wirkende Aktorkraft von dem Stößel zu entkoppeln. Eine Längsachse wird hier definiert als die Achse, welche entlang der Richtung der größten Ausdehnung des Stößels gebildet ist. Diese Ausführungsform bietet insbesondere den Vorteil, dass Querkräfte, welche auf den Aktor wirken, nicht oder allenfalls kaum auf den Stößel übertragen werden und das selbst dann, wenn der Aktor und der Stößel miteinander mittels des Kopplungselements gekoppelt sind. Diese Querkräfte sind in Bezug auf den Stößel insbesondere deshalb nicht erwünscht, weil diese Kräfte den Stößel schief in einen Ventilsitz zum Verschließen der Fluideinlassöffnung drücken können, so dass sich das Ventil schwierig bzw. gar nicht schließen lässt, wodurch Leckage und Verschleiß entstehen können. Weiterhin bietet diese Ausführungsform insbesondere den Vorteil, dass ausschließlich axiale Kräfte, dass heißt, Kräfte in Richtung der Längsachse des Stößels, mittels des Aktors auf den Stößel übertragen werden. Dadurch ist eine besonders geradlinige Stößelführung ermöglicht, was weiterhin in vorteilhafter Weise einen Verschleiß reduziert bzw. sogar vermeidet. In dieser bevorzugten Ausführungsform sind also der Stößel und der Aktor radial voneinander entkoppelt. Radial bezieht sich hier insbesondere auf eine Querrichtung relativ zu der Längsachse des Stößels.

Gemäß einer anderen Ausführungsform ist das Kopplungselement eine mit dem Stößel verbundene Buchse. Bei einem Betrieb des Einlassventils drückt der Aktor insbesondere auf die Buchse, und verlagert so den Stößel. Die Buchse ermöglicht also insbesondere eine Kraftübertragung von dem Aktor auf den Stößel. Weiterhin ist durch das Vorsehen der Buchse eine einfache Einstellung eines Stößelhubs ermöglicht. Insbesondere kann der Stößel mit der Buchse mittels einer Presspassung verbunden sein. Eine besonders feste Verbindung zwischen der Buchse und dem Stößel wird insbesondere mittels Verkrimpen ermöglicht.

In einer anderen Ausführungsform ist ein Zylinder zum Führen des Stößels vorgesehen. Hierfür weist der Zylinder eine Bohrung, insbesondere eine Durchgangsbohrung, entlang seiner Längsachse auf. Dadurch wird insbesondere in vorteilhafter Weise eine einfache und genaue Führung einer Stößelbewegung ermöglicht. Vorzugsweise weist der Zylinder eine Führungsbohrung zum Führen des Aktors auf. Dadurch ist in vorteilhafter Weise auch eine einfache und genaue Führung einer Aktorbewegung ermöglicht. Insbesondere weist der Zylinder sowohl eine erste Führungsbohrung zum Führen des Stößels und eine zweite Führungsbohrung zum Führen des Aktors auf. Diese Ausführungsform bietet insbesondere den Vorteil, dass aufgrund der Unabhängigkeit der beiden Führungen voneinander ein Führungsspiel an der Aktorführung klein gehalten werden kann, wodurch eine Exzentrizität von dem Aktor gegenüber dem Zylinder auch klein gehalten werden kann. Dadurch werden in vorteilhafter Weise Schaltzeiten des Einlassventils ermöglicht. Der Aktor kann entweder vorzugsweise an seinem Innendurchmesser oder insbesondere an seinem Außendurchmesser geführt werden. Insbesondere die Ausführungsform der Führung an dem Innendurchmesser bietet den Vorteil, dass hierdurch eine besonders genaue und geradlinige Führung ermöglicht wird.

Gemäß einer weiteren Ausführungsform ist eine Feder zum Halten des Stößels in einer Offenposition vorgesehen. Die Feder drückt also insbesondere den Stößel in eine Position, in welcher die Fluideinlassöffnung nicht verschlossen ist. Insbesondere wenn keine Aktorantriebskraft auf den Stößel wirkt, wird so der Stößel in einer Offenposition gehalten. Das weist den Vorteil auf, dass wenn beispielsweise keine elektrische Spannung zum Betätigen des Aktors an dem Einlassventil anliegt, das Einlassventil offen ist. Bei Betätigung des Aktors drückt der Aktor über das Kopplungselement den Stößel gegen die Federkraft in eine Geschlossenposition, in welcher der Stößel die Fluideinlassöffnung verschließt. Hierbei wird insbesondere der Stößel in einen Ventilsitz gedrückt, wobei sich das Vorhandensein eines Ventilsitzes nicht nur auf diese Ausführungsform beschränken soll, sondern allgemein bei sämtlichen Ausführungsformen vorgesehen sein kann.

Der Aktor weist einen magnetischen Anker zum Übertragen einer Aktorantriebskraft auf das Kopplungselement auf. Vorzugsweise wird der magnetische Anker in der Führungsbohrung des Zylinders geführt. Vorzugsweise weist der Aktor eine Spulenanordnung auf, welche insbesondere eingerichtet ist, bei entsprechender elektrischer Bestromung ein entsprechendes Magnetfeld auszubilden, welches den magnetischen Anker anziehen kann, insbesondere gegen eine eventuell vorhandene Federkraft, so dass eine Bewegung des magnetischen Ankers ermöglicht wird. Querkräfte, welche auf den magnetischen Anker wirken, welche beispielsweise aufgrund magnetischer Einflüsse verursacht sein können, werden aufgrund der Trennung von Aktor und Stößel nicht bzw. kaum und daher vernachlässigbar auf den Stößel übertragen.
und Stößel nicht bzw. kaum und daher vernachlässigbar auf den Stößel übertragen.

In einer anderen Ausführungsform ist der Stößel beispielsweise aus dem Material 100Cr6 gebildet. Vorzugsweise ist der Anker aus einem magnetisch rostfreien Stahl gebildet. Insbesondere ist der Zylinder aus dem Material 100Cr6 gebildet. Vorzugsweise ist die Buchse aus einem nicht-magnetischen rostfreien Stahl gebildet.

In einer Ausführungsform des Montageverfahrens kann insbesondere vorgesehen sein, dass vor und/oder nach jedem einzelnen Montageschritt ein Funktionstest des Einlassventils durchgeführt werden kann. Ein solcher Funktionstest umfasst insbesondere einen Dichtungstest, welcher insbesondere eine Dichtigkeit des Einlassventils überprüft. Das heißt, dass insbesondere ein Abdichtverhalten überprüft wird und insbesondere ob der Stößel die Fluideinlassöffnung ausreichend verschließt. Insbesondere kann das Abdichtverhalten auch direkt pneumatisch geprüft werden. Vorzugsweise wird vor, während und/oder nach jedem Montageschritt das Einlassventil mit einer Testspule geschaltet, wodurch in vorteilhafter Weise Schaltströme und/oder Schaltzeiten gemessen werden können. Entsprechend der gemessenen Schaltströme und Schaltzeiten können dann beispielsweise weitere Einstellprozesse, wie ein Einstellen einer Federkraft oder eine Orientierung der Spule eines Spulenkörpers, durchgeführt werden. Mittels der Testspule ist es insbesondere ermöglicht, Ventilparameter wie beispielsweise einen Durchfluss, eine Leckage oder Schaltzeiten zu überprüfen.

Im Zusammenhang mit dem Montageverfahren weist das Vorsehen, dass der Aktor und der Stößel getrennt voneinander gebildet werden, den Vorteil auf, dass insbesondere bei nicht zufriedenstellenden Testergebnissen, das Einlassventil einfach wieder demontiert werden kann und die einzelnen Teile wie beispielsweise der Aktor oder der Stößel ausgetauscht bzw. wiederverwertet werden können. Somit wird in vorteilhafter Weise Material eingespart.

Die Erfindung wird im Folgenden anhand von bevorzugten Ausführungsbeispielen unter Bezugnahme auf Figuren näher erläutert.

### Hierbei zeigen

- Fig. 1: ein Einlassventil für eine Fluidpumpe,
- Fig. 2: ein schematisches Ablaufdiagramm eines Montageverfahrens für ein Einlassventil für eine Fluidpumpe,
- Fig. 3: ein Einlassventil für eine Fluidpumpe integriert in ein Commom-Rail-Einspritzsystem,
- Fig. 4: eine graphische Abhängigkeit einer Kolbenposition von einem Nockendrehwinkel,
- Fig. 5: ein weiteres Einlassventil für eine Fluidpumpe,
- Fig. 6a: ein Einlassventil für eine Fluidpumpe gemäß der Erfindung,
- Fig. 6b: eine vergrößerte Ansicht eines Ausschnitts aus dem Einlassventil in der Fig. 6a,
- Fig. 7: eine Explosionsdarstellung des in Fig. 6a gezeigten Einlassventils,
- Fig. 8 bis 13: jeweils Ansichten von Zwischenmontagezuständen des in Fig. 6 gezeigten Einlassventils während einer Ausführungsform des Montageverfahrens,
- Fig. 14: das fertig montierte Einlassventil aus Fig. 8 bis 13,
- Fig. 15: eine Draufsicht von schräg oben des Einlassventils aus Fig. 14,
- Fig. 16: eine Draufsicht des in Fig. 14 gezeigten Einlassventils,
- Fig. 17: eine Schnittansicht eines Einlassventils für eine Fluidpumpe und
- Fig. 18: eine Schnittansicht eines weiteren Einlassventils für eine Fluidpumpe.

Im Folgenden werden für gleiche Merkmale die gleichen Bezugszeichen verwendet.

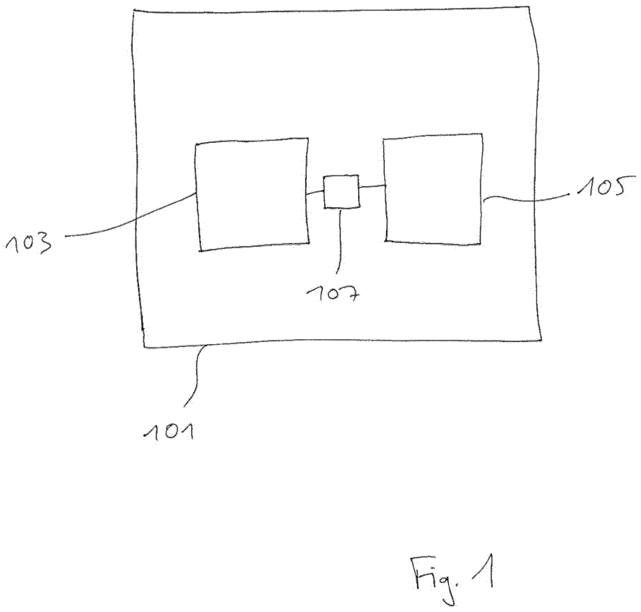

Fig. 1 zeigt ein Einlassventil 101 für eine Fluidpumpe (nicht gezeigt) . Bei der Fluidpumpe handelt es sich vorzugsweise um eine Benzin- oder eine Dieselpumpe. Das Einlassventil 101 umfasst einen Stößel 103. Der Stößel 103 ist bewegbar gelagert und kann eine Fluideinlassöffnung (nicht gezeigt) verschließen. Das Einlassventil 101 umfasst ferner einen Aktor 105, welcher den Stößel 103 verlagern kann. Hierfür stellt der Aktor insbesondere eine Aktorantriebskraft bereit. Der Stößel 103 und der Aktor 105 sind getrennt voneinander gebildet. Damit eine Aktorantriebskraft auf den Stößel übertragen werden kann, ist ein Kopplungselement 107 vorgesehen, mittels welchen der Aktor 105 und der Stößel 103 miteinander koppelbar sind.

In einer nicht gezeigten Ausführungsform ist das Kopplungselement 107 ferner gebildet, eine quer zu einer Längsachse des Stößels 103 wirkende Aktorkraft, insbesondere Aktorantriebskraft, von dem Stößel 103 zu entkoppeln. Aufgrund dieser radialen Entkopplung, wobei sich radial auf eine Querrichtung relativ zu der Längsachse des Stößels 103 bezieht, werden mittels des Aktors 105 lediglich axiale, also in Richtung der Längsachse, wirkende Aktorkräfte, insbesondere Aktorantriebskräfte, auf den Stößel 103 übertragen. Querkräfte werden nicht auf den Stößel 103 übertragen, so dass in vorteilhafter Weise der Stößel 103 die Fluideinlassöffnung zuverlässig und sicher verschließen kann. Hierdurch wird insbesondere in vorteilhafter Weise eine Leckage vermindert bzw. vermieden. Weiterhin wird auch ein Materialverschleiß des Stößels 103 reduziert.

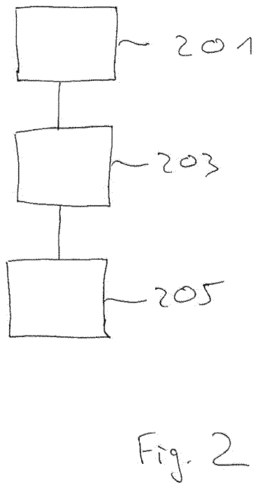

Fig. 2 zeigt ein Ablaufdiagramm eines Montageverfahrens für ein Einlassventil für eine Fluidpumpe. In einem Schritt 201 werden ein Stößel zum Verschließen einer Fluideinlassöffnung und ein Aktor zum Verlagern des Stößels vorgesehen, wobei der Stößel bewegbar gelagert wird. In einem Schritt 203 werden der Aktor und der Stößel getrennt voneinander gebildet, wobei in einem Schritt 205 ein Kopplungselement vorgesehen wird, welches eine Aktorantriebskraft auf den Stößel übertragen kann. Mittels des Kopplungselements wird insbesondere eine Kopplung des Aktors mit dem Stößel ermöglicht.

In einer nicht gezeigten Ausführungsform können vor und/oder nach und/oder zwischen den Schritten 201, 203 und 205 Prüfverfahren bzw. Prüfschritte vorgesehen sein, in welchen eine korrekte Funktion der gerade eingebauten Komponenten überprüft wird. Insbesondere kann hierbei ein Abdichtverhalten pneumatisch, insbesondere direkt pneumatisch, geprüft werden.

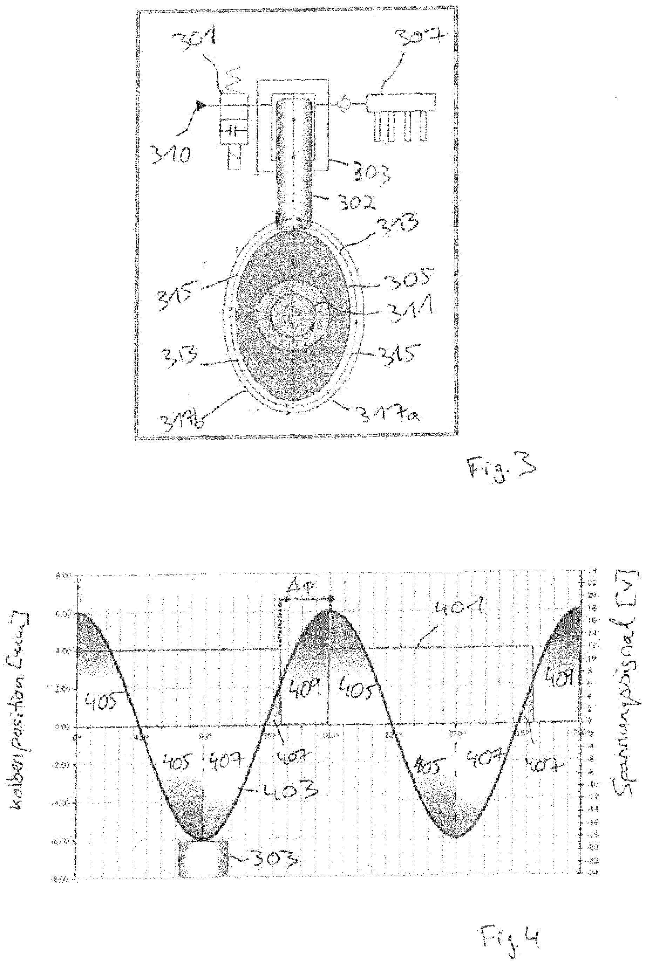

Fig. 3 zeigt ein Einlassventil 301 einer Fluidpumpe, insbesondere einer Benzin- oder Dieselpumpe. Das Einlassventil 301 weist einen Kolben 302 auf, welcher in einem Zylinder 303 geführt wird. Der Kolben 302 ist mit einer Nocke 305 verbunden und wirkt mit dieser zusammen. Das Einlassventil 301 regelt insbesondere einen Kraftstoffdurchfluss, beispielsweise einen Benzin- oder Dieseldurchfluss, zu einem Common-Rail-Einspritzsystem. In Fig. 3 ist ein Hochdruckanschluss 307 des Common-Rail-Einspritzsystems gezeigt. Hierbei regelt das Einlassventil 301 ein Kraftstoffvolumen zwischen einem Niedrigdruckanschluss 310 des Common-Rail-Einspritzsystems und dem Hochdruckanschluss 307.

Der Pfeil mit dem Bezugszeichen 311 kennzeichnet eine Umdrehungsrichtung der Nocke 305. Die Pfeile mit dem Bezugszeichen 313 kennzeichnen eine Bewegungsphase der Nocke 305, in welcher ein Kraftstoff angesaugt wird. Die Pfeile mit dem Bezugszeichen 315 kennzeichnen eine Bewegungsphase der Nocke 305, in welcher der Kraftstoff verdichtet wird. Hierbei wechseln sich mit 90° Phasenverschiebung die Ansaugphase mit der Verdichtungsphase ab.

Die beiden Pfeile mit respektive den Bezugszeichen 317a und 317b kennzeichnen respektive eine Nockenbewegung über eine Kompressionsphase bzw. eine Verdichtungsphase und ein Ansaugphase.

Das Einlassventil 301 ist als ein SO (stromlos offen)-Ventil gebildet. Dass heißt, wenn kein Steuerstrom anliegt, so ist das Ventil 301 in einer Offenposition. In einer nicht gezeigten Ausführungsform kann vorgesehen sein, dass das Einlassventil 301 als ein SG (stromlos geschlossen)-Ventil gebildet ist. Das heißt, wenn kein Steuerstrom anliegt, so ist das Ventil 301 in einer Geschlossenposition.

Fig. 4 zeigt einen Graphen, wobei auf der linken Ordinate eine Kolbenposition in Millimetern aufgetragen ist. Auf der rechten Ordinate ist ein Spannungssignal in Volt aufgetragen, welches für eine PWM-Stromsteuerung zwecks Betätigung des Einlassventils 301 verwendet wird, wobei "PWM" für den englischen Fachbegriff "Puls-width modulation" steht. Im deutschen Sprachgebrauch werden üblicherweise die Begriffe "Pulsweitenmodulation", "Pulsbreitenmodulation" oder "Pulsdauermodulation" verwendet. Auf der Abszisse ist ein Drehwinkel in Grad der Nocke 305 aufgetragen. Die Abhängigkeit des Spannungssignals über den Nockendrehwinkel ist mittels der Kurve mit dem Bezugszeichen 401 gekennzeichnet. Die Abhängigkeit der Kolbenposition von dem Nockendrehwinkel ist mittels der Kurve mit dem Bezugszeichen 403 gekennzeichnet. Ein Phasenunterschied zwischen den beiden Graphen 401 und 403 ist exemplarisch mit Δϕ gekennzeichnet. Die in dem Graphen dargestellten Abhängigkeiten der einzelnen physikalischen Größen sind typisch für den in Fig. 3 gezeigten Aufbau, wenn das Einlassventil 301 als ein SG-Ventil gebildet ist.

In den Bereichen mit dem Bezugszeichen 405 wird Kraftstoff von dem Niedrigdruckanschluss 310 angesaugt. Die Bereiche 405 gehen von bezogen auf die Abszisse von 0° bis 45°, von 45° bis 90°, von 180° bis 225° und von 225° bis 270°.

In den Bereichen mit dem Bezugszeichen 407 findet ein Kraftstofffluss hin zu dem Niedrigdruckbereich 310 statt. Die Bereiche 407 gehen bezogen auf die Abszisse von 90° bis 135°, von 135° bis 145°, von 270° bis 315° und von 315° bis 325°.

In den Bereichen mit dem Bezugszeichen 409 findet ein Kraftstofffluss in Richtung des Hochdruckanschlusses 307 statt. Die Bereiche 409 gehen bezogen auf die Abszisse von 145° bis 180° und von 325° bis 360°.

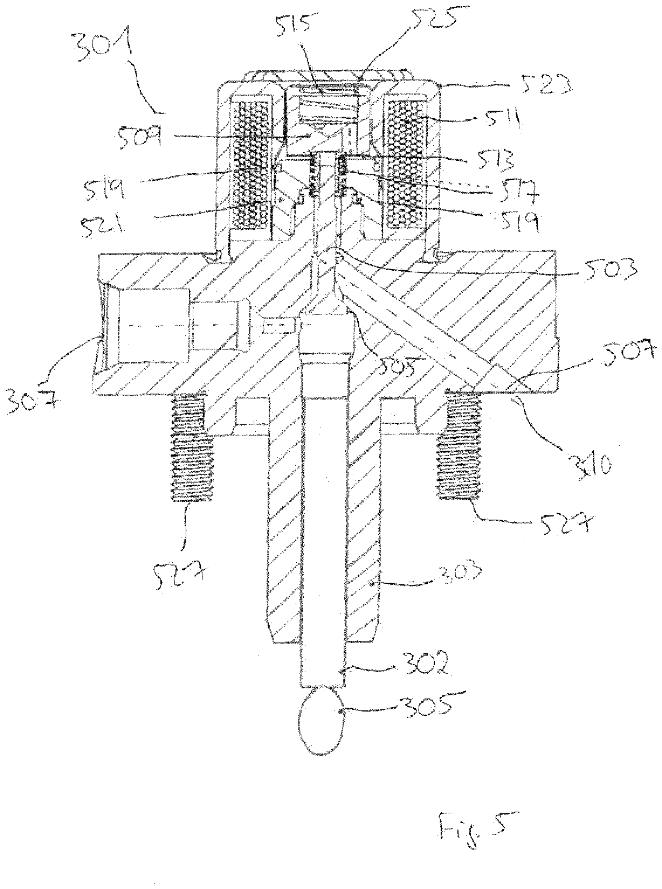

Fig. 5 zeigt eine Detailansicht des Einlassventils 301, welches hier als ein SG-Ventil gebildet ist. Wie zu erkennen wird der Kolben 302 in einer Führungsbohrung in dem Zylinder 303 geführt. Das Einlassventil 301 umfasst einen Stößel 503, welcher in einer Geschlossenstellung in einen Ventilsitz 505 sitzt, wodurch eine Einlassöffnung 507 des Niedrigdruckanschlusses 310 verschlossen wird, so dass durch das Einlassventil 301 kein Kraftstoff fließen kann.

Wenn der Stößel 503 nach unten in Richtung des Kolbens 302 bewegt wird, so öffnet sich dadurch die Einlassöffnung 507 und Kraftstoff kann von dem Niedrigdruckanschluss 310 zu dem Hochdruckanschluss 307 fließen.

Zur Betätigung des Stößels 503 ist ein Anker 509 gebildet, welcher ein magnetisches Material umfasst. Ferner ist eine Spule 511 vorgesehen, welche bei entsprechender elektrischer Bestromung ein Magnetfeld erzeugt. Dadurch kann der Anker 509 in Richtung der Längsachse des Stößels 503 in die entgegengesetzte Richtung bezogen auf den Kolben 302, also weg von dem Kolben 302, verlagert werden. Die Spule 511 und der Anker 509 bilden hier einen Aktor zum Verlagern des Stößels 503.

Es ist ferner ein Zwischenstößel 513 vorgesehen, welcher mit dem Stößel 503 fest verbunden ist. Der Stößel 503 mit dem Zwischenstößel 513 ist getrennt von dem Anker 509 gebildet. Bei Betätigung der Spule 511 drückt der magnetische Anker 509 gegen den Zwischenstößel 513 und drückt so den Stößel 503 in die Richtung des Kolbens 302 nach unten, so dass die Fluideinlassöffnung 507 geöffnet wird. Der Zwischenstößel 513 bildet insofern ein Kopplungselement zum Übertragen einer Aktorantriebskraft auf den Stößel 503, in dem der Zwischenstößel 513 den magnetischen Anker 509 mit dem Stößel 503 koppelt.

Am oberen Ende des Einlassventils 301, wobei das untere Ende des Einlassventils 301 in Richtung der Nocke 305 zeigt, ist eine Feder 515 gebildet, welche den Zwischenstößel 513 nach unten in Richtung des Kolbens 302 drückt. Ferner ist eine weitere Feder 517 gebildet, welche eine größere Federkonstante als die Feder 515 aufweist. Die weitere Feder 517 erzeugt somit eine größere Federkraft als die Feder 515. Die Feder 517 kann insofern auch als eine starke Feder bezeichnet werden. Die Feder 515 kann insofern auch als eine schwache Feder bezeichnet werden. Der Anker 509 ist zwischen der schwachen Feder 515 und der starken Feder 517 angeordnet, so dass, wenn die Spule 511 nicht bestromt wird, der Anker 509 also nicht betätigt wird, die starke Feder 517 den Anker 509 nach oben weg von dem Kolben 302 in eine obere Position drückt. Das Ventil 301 ist insofern geschlossen.

Wenn der Anker 509 betätigt wird, also die Spule 511 bestromt wird, drückt der Anker 509 auf den Zwischenstößel 513 und somit auf den Stößel 503, wodurch sich die Einlassöffnung 507 öffnet.

Weiterhin ist auch ein Magnetkern 521 gebildet, welcher ebenfalls vom Aktor umfasst ist. Darüber hinaus ist ein Jochring 523 zum Verpressen der Spule 511, des Ankers 509 und des Magnetkerns 521 vorgesehen. Des Weiteren ist eine Hülse 525 vorgesehen, welche als ein Deckel des Einlassventils 301 wirkt, so dass das Einlassventil 301 in vorteilhafter Weise von der Außenumgebung abgedichtet ist. Ferner sind noch zwei O-Ringe 519 zum Abdichten des Einlassventils 301 bzw. der Hülse 525 und des Magnetkerns 521 vorgesehen.

Ferner sind zwei Gewindeschrauben 527 an dem Einlassventil 301 angeordnet, mittels welcher das Einlassventil 301 zwecks Befestigung auf eine Benzin- oder Dieselpumpe geschraubt werden kann.

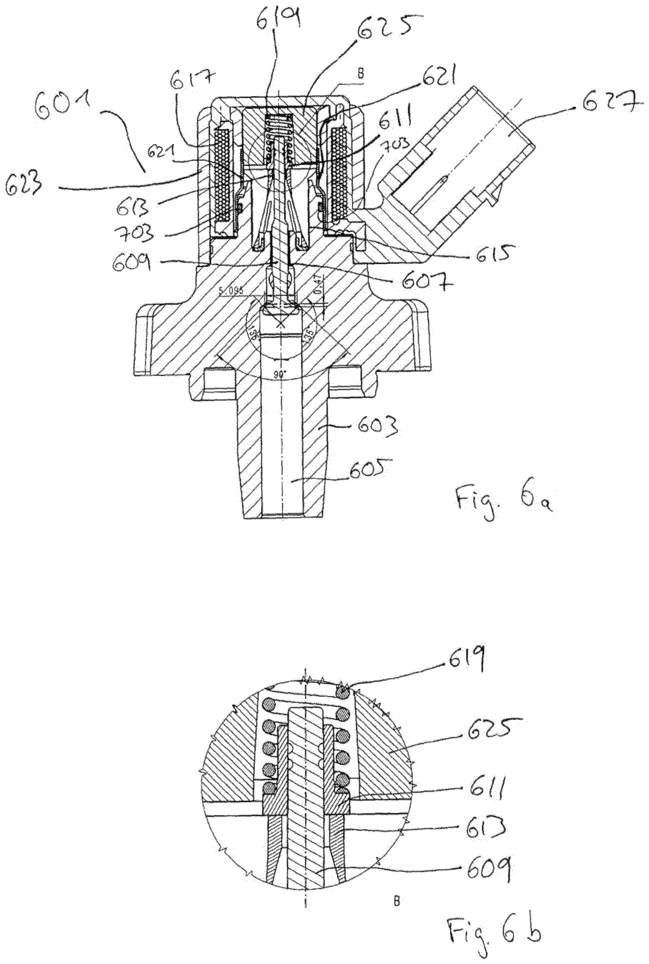

Fig. 6a zeigt ein weiteres Einlassventil 601, welches als ein SO-Ventil gebildet ist. In der Zeichnung in Fig. 6a ist ein Bereich mit "B" gekennzeichnet, welcher in Fig. 6b vergrößert dargestellt ist.

Das Einlassventil 601 weist einen Zylinder 603 auf, in welchem ein Kolben 605 hin- und herbewegt werden kann. Der Kolben 605 kann mit einer nicht gezeigten Nocke analog zu Fig. 5 zusammenwirken.

Oberhalb des Zylinders 603 ist eine Führung 607 für einen Stößel 609 gebildet. Der Stößel 609 ist bevorzugter Weise aus dem Material 100Cr6 gebildet. Der Stößel 609 ist mit einer Buchse 611 fest verbunden.

Konzentrisch um den Stößel 609 herum ist ein Anker 613 aus einem magnetischen Material in einer Ankerführung 615 getrennt von der Buchse 611 und dem Stößel 609 gebildet. Konzentrisch um den magnetischen Anker 613 herum ist eine Spule 617 angeordnet, welche bei entsprechender elektrischer Bestromung ein Magnetfeld erzeugen kann. Somit ist es in vorteilhafter Weise ermöglicht, den magnetischen Anker 613 in Richtung einer Längsachse des Stößels 609 zu verlagern. Hierbei ist der magnetische Anker 613 so angeordnet, dass dieser bei einer Bewegung in Richtung weg von dem Zylinder 603 auf die Buchse 611 drückt und so den Stößel 609 in Richtung weg von dem Zylinder 603 verlagern kann. Die Buchse 611 bildet insofern ein Kopplungselement zum Übertragen einer Ankerantriebskraft auf den Stößel 609.

An dem bezogen auf die Figurenebene oberen Ende des Stößels 609 ist eine Feder 619 gebildet, welche mittels ihrer Federkraft den Stößel 609 in Richtung des Zylinders 603 drückt. Wenn also der Anker 613 nicht betätigt wird, drückt die Feder 619 den Stößel 609 in eine Offenposition, in welcher der Stößel 609 nicht eine nicht gezeigte Fluideinlassöffnung verschließt. Das Einlassventil 601 ist insofern als ein stromlos offen geschaltetes Einlassventil gebildet.

Ferner umfasst das Einlassventil 601 noch eine Hülse 621 und einen Jochring 623 zum Verpressen bzw. Abdichten eines Magnetkerns 625, welcher mit dem magnetischen Anker 613 und der Spule 617 einen Aktor zum Verlagern des Stößels 609 bildet. Die Hülse 621 kann insbesondere als eine dünnwandige Buchse gebildet sein und wird insbesondere oben auf den Magnetkern 625 gepresst und kann dann vorzugsweise anschließend verschweißt werden, wobei beispielsweise vorgesehen sein kann, dass die Hülse 621 unten über einen O-Ring 703 geschoben wird und insbesondere anschließend mit dem Zylinder 603 verschweißt wird. Somit kann in vorteilhafter Weise eine Abdichtung eines Ankerraums bewirkt werden.

Ferner umfasst das Einlassventil 601 einen Spulenstecker 627 zum Anschließen eines Steuerkabels für die Spule 617.

Ferner sind in der Fig. 6a Bemaßungen in Millimeter und Winkelangaben in Grad eingezeichnet, welche aber lediglich als beispielhaft und nicht als einschränkend zu verstehen sind.

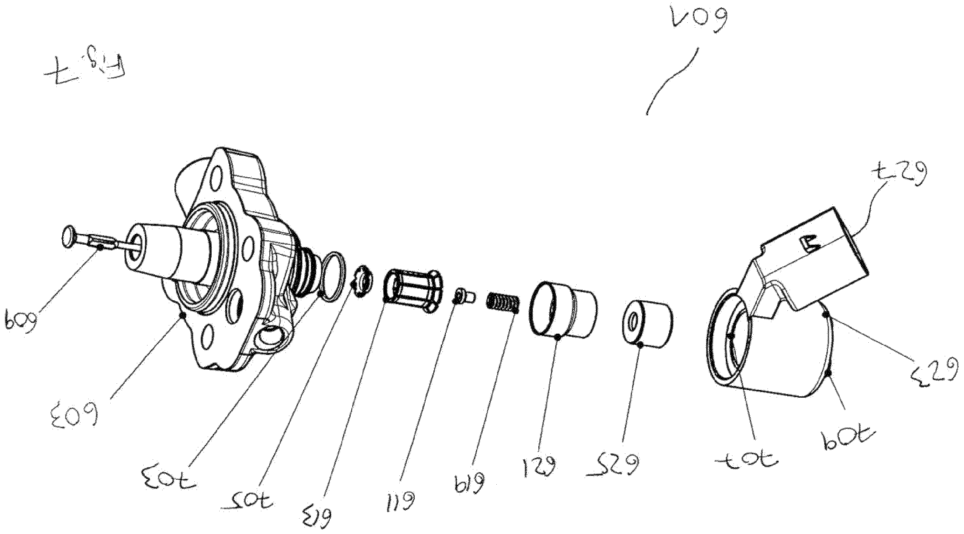

Fig. 7 zeigt eine Explosionsdarstellung des Einlassventils 601 aus Fig. 6a. Mittels der Explosionsdarstellung sind weitere Elemente des Einlassventils 601 besser sichtbar. Diese Elemente sind beispielsweise der O-Ring 703, eine nicht-magnetische Scheibe 705, einen Spulenkörper 707, in welchem die Spule 617 angeordnet ist und ein Deckelgehäuse 709, welches an dem Jochring 623 vorgesehen ist. Das Deckelgehäuse 709 umfasst insbesondere den Spulenstecker 627.

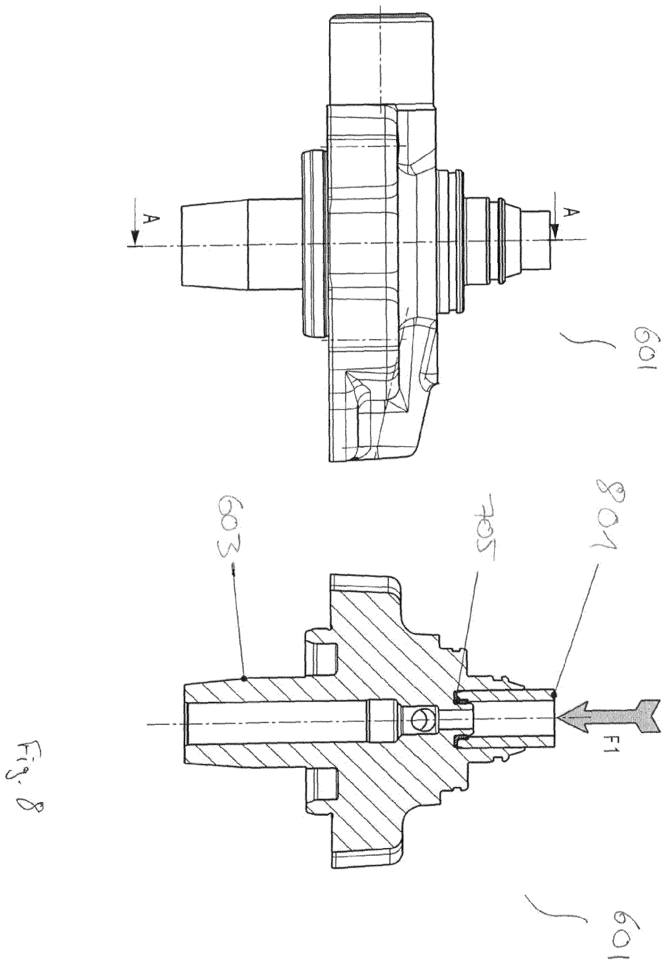

Fig. 8 bis Fig. 14 zeigen jeweils verschiedene Zwischenmontagezustände in einem Montageverfahren für das Einlassventil 601. In den Figuren 8 bis 14 zeigt jeweils die linke Zeichnung eine Seitenansicht des Einlassventils 601 und die rechte Zeichnung zeigt eine Schnittansicht entlang der in der linken Zeichnung eingezeichneten Schnittlinie, welche respektive mit A-A, B-B, E-E, D-D, E-E, C-C und F-F bezeichnet sind.

Der Übersicht halber sind nicht sämtliche Elemente immer mit den entsprechenden Bezugszeichen gekennzeichnet.

Bezugnehmend auf Fig. 8 wird gemäß einem Montageschritt mittels eines Einpresswerkzeugs 801 die nicht-magnetische Scheibe 705 auf den Zylinder 603 montiert und eingepresst. Das Einpressen ist hier mittels eines Pfeils F1 gekennzeichnet.

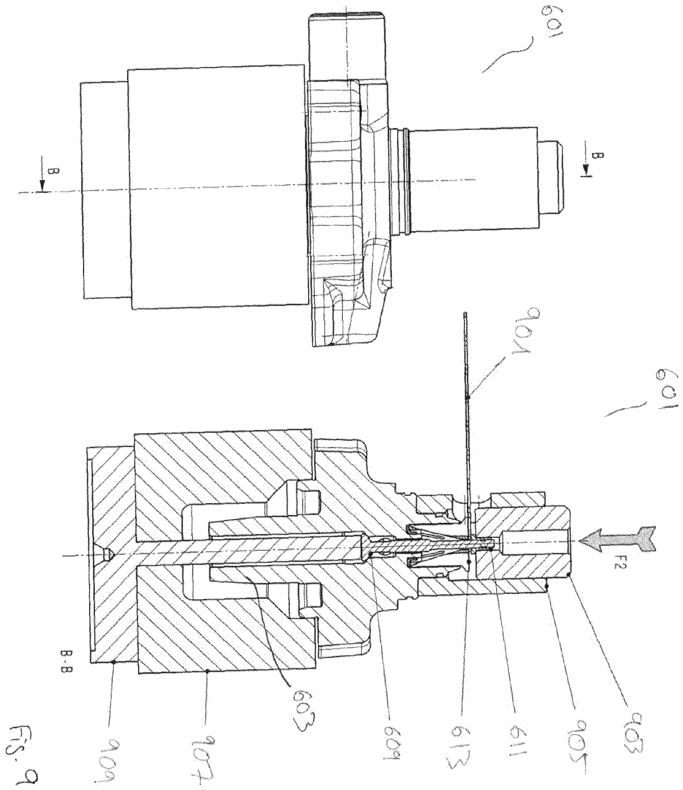

In Fig. 9 wird gezeigt, wie die Buchse 611 aufgepresst wird. Hierbei ist eine Einstellscheibe 901 vorgesehen, welche einen Abstand zwischen der Buchse 611 und dem Anker 613 einstellen kann. Das Aufpressen der Buchse 611 auf den Stößel 609 wird mittels entsprechender Aufpresswerkzeuge 903 und 905 durchgeführt. Das Aufpressen selber ist mit einem Pfeil F2 gekennzeichnet. Ferner ist eine Lagerung 907 für den Zylinder 603 vorgesehen. Darüber hinaus ist auch eine Lagerung 909 für den Stößel 609 vorgesehen. Mittels der beiden Lagerungen 907 und 909 können der Zylinder 603 und der Stößel 609 besonders einfach und sicher gehalten werden, so dass die einzelnen Montageschritte einfach und sicher ausgeführt werden können.

Ferner wird ein Ventilhub des Einlassventils 601 eingestellt. Hierbei wird der Stößel 609 gegen seinen Zylindersitz gedrückt. Dann wird die Einstellscheibe 901 zwischen dem Anker 613 und dem Magnetkern 625 geschoben. Der Anker 613 wird bis zum Anschlag nach unten gedrückt. Im Folgenden wird dann die Einstellscheibe 901 entfernt, so dass in vorteilhafter Weise der Ventilhub eingestellt ist. Es ist ferner ein Luftspalt zwischen dem Magnetkern 625 und dem Anker 613 gebildet, welcher auch als ein Restluftspalt bezeichnet werden kann. Dadurch ist es in vorteilhafter Weise ermöglicht, dass der Stößel 609 in seinem Zylindersitz abdichtet.

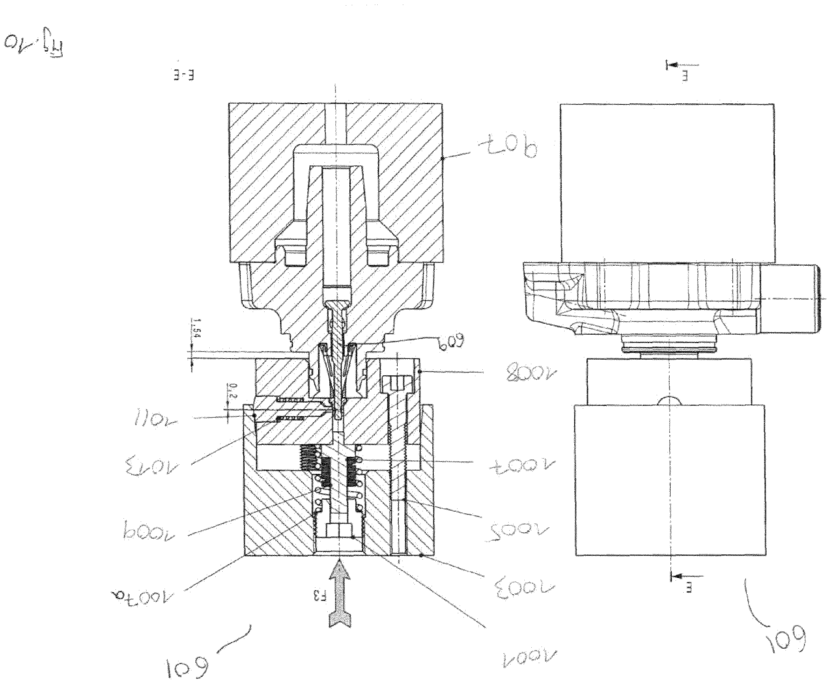

Fig. 10 zeigt ein Verstemmen der Buchse 611, was mit einem Pfeil F3 symbolisch gekennzeichnet ist. Für das Verstemmen ist insbesondere ein Justierbolzen 1001 vorgesehen, welcher einen Druckkonus 1003 und eine Sechskantschraube 1005 umfasst. Gut zu erkennen in Fig. 10 ist auch eine Federunterlegscheibe 1007 für eine Werkzeugfeder 1007a. Ebenfalls gut zu erkennen ist eine Federführung 1009 für die Feder 619. In Fig. 10 auch gut zu erkennen ist eine Verstemmstift 1011 mit einer Verstemmstiftfeder 1013. Insbesondere sind insgesamt drei solcher Verstemmstifte vorgesehen, wobei der Übersicht halber nur ein Verstemmstift gezeigt ist. Wenn von oben mit der Kraft F3 auf den Justierbolzen 1001 gedrückt wird, so werden dadurch die drei Verstemmstifte 1011 nach innen verlagert bzw. bewegt und drücken so auf die Buchse 611. Dadurch wird in vorteilhafter Weise die Buchse 611 an drei Stellen mit dem Stößel 609 verstemmt.

Eine Führung für die Sechskantschraube 1005 wird mit dem Bezugszeichen 1008 gekennzeichnet. Die in Fig. 10 eingezeichneten Bemaßungen in Millimetern sind auch hier lediglich als beispielhaft und nicht als einschränkend zu verstehen.

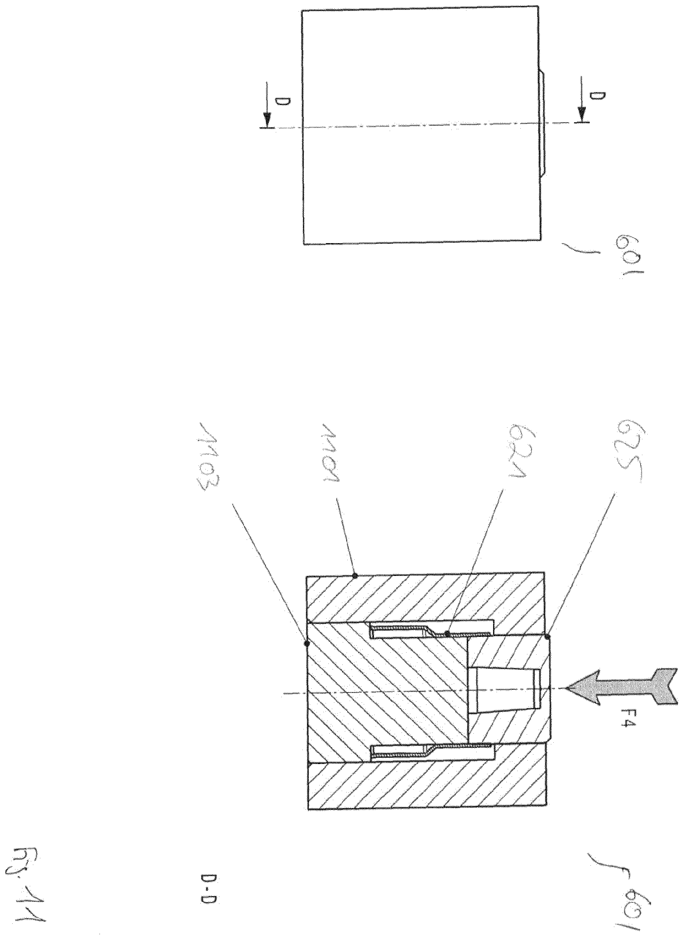

In Fig. 11 ist gezeigt, wie das Einpressen des Magnetkerns 625 in die Hülse 621 durchgeführt werden kann. Dieses Einpressen ist mittels eines Pfeils F4 symbolisch dargestellt. Eine Führung für die Hülse 621 im Magnetkern 625 ist mit dem Bezugszeichen 1101 gekennzeichnet. Eine innere Führung ist mit dem Bezugszeichen 1103 gekennzeichnet.

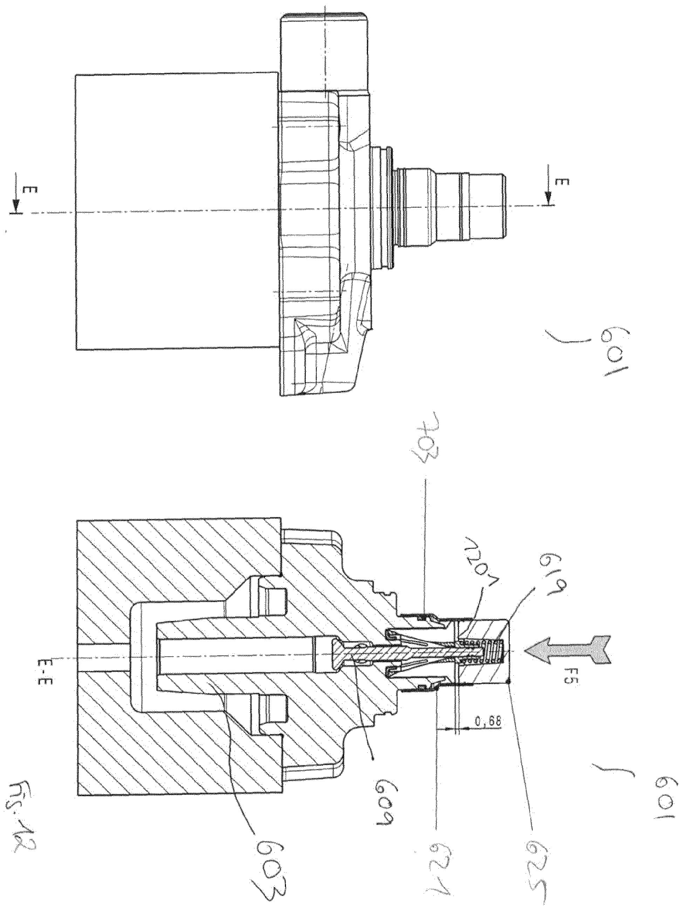

In Fig. 12 wird gezeigt, wie der Magnetkern 625 und die Hülse 621 auf den Zylinder 603 aufgepresst werden. Dieses Aufpressen ist mittels eines Pfeils F5 symbolisch dargestellt.

Ferner wird in Fig. 12 gezeigt, wie eine Nettofederkraft eingestellt und ein Restluftspalt 1201 eingestellt werden. Die entsprechende in die Fig. 12 eingezeichnete Bemaßung für den Restluftspalt 1201 ist nur als beispielhaft und nicht als einschränkend anzusehen. Hierbei werden der Anker 613, die Feder 619 und die Hülse 621 montiert. Um die Federkraft einzustellen, wird insbesondere die Hülse 621 in verschiedenen Schritten nach unten geschoben. Bei jedem Schritt wird das Einlassventil 601 mit einer Testspule geschaltet und es werden Schaltströme und/oder Schaltzeiten gemessen. Wenn die gewünschten Schaltströme oder Schaltzeiten erreicht sind, kann der Einstellprozess beendet werden. Die Testspule wird dann insbesondere entfernt und die Hülse 621 wird an dem Magnetkern 625 verschweißt. Vorzugsweise kann die Hülse 621 auch an den Zylinder 603 verkrimpt werden. Hierzu ist insbesondere an dem Zylinder 603 eine Nut vorgesehen Da die Verbindungshülse magnetkernabgedichtet ist, kann der Einstellprozess mittels eines O-Rings hydraulisch geschehen. Insbesondere vor dem Schweißen ist es ermöglicht, mittels der Testspule die Ventilparameter wie Durchfluss, Leckage oder Schaltzeiten zu überprüfen. Wenn die Testergebnisse nicht zufriedenstellend bzw. nicht in Ordnung sind, kann das Einlassventil 601 einfach wieder demontiert werden, um insbesondere den Zylinder 603 wieder zu verwenden. Hierbei wird der Magnetkern 625 mit der Hülse 621 von dem Zylinder 603 geschraubt. Es wird dann oben auf den Stößel 609 gedrückt und die einzelnen Teile können einfach entfernt werden.

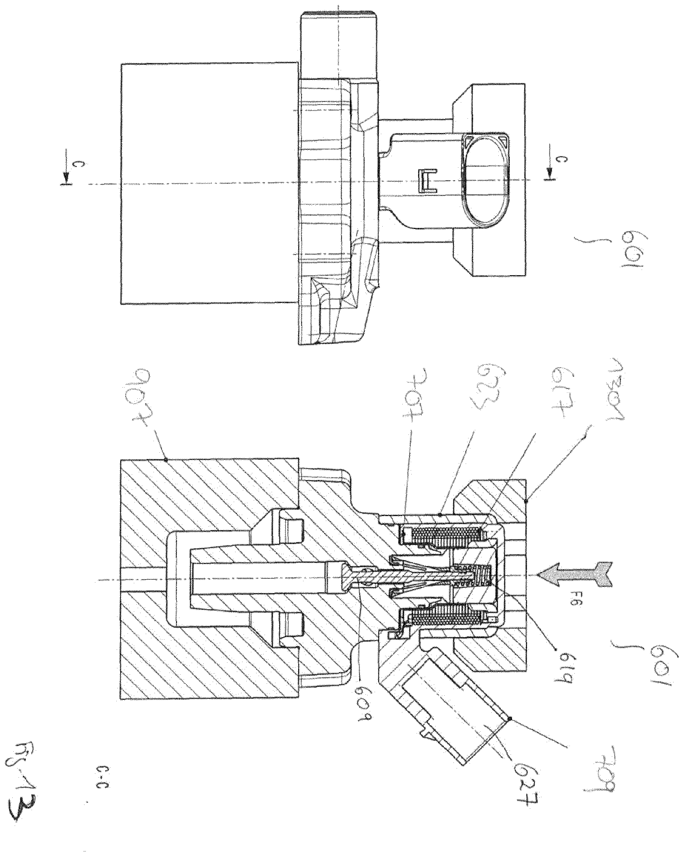

In Fig. 13 ist das Aufpressen der Spule 617 und dem Deckelgehäuse 709 mit dem Spulenstecker 627 symbolisch mit dem Pfeil F6 gekennzeichnet. Hierfür wird ein Pressring 1301 als Werkzeug zum Aufpressen der Spule 617 verwendet. In einem nicht gezeigten Ausführungsbeispiel kann der Spulenstecker 627 auch an der oberen Seite der Spule 617 angeordnet sein.

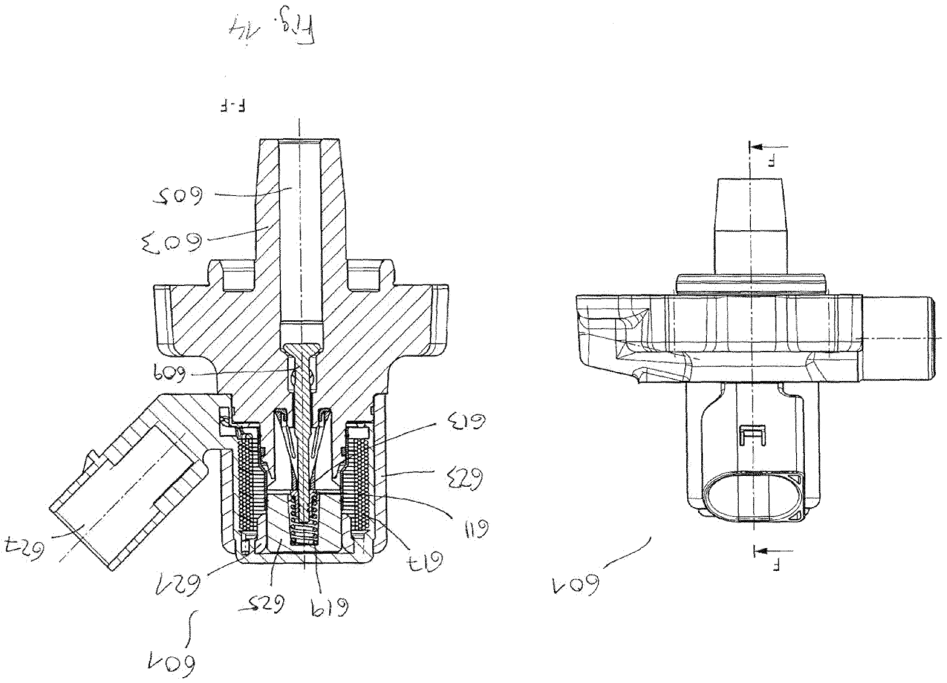

Fig. 14 zeigt das fertig montierte Einlassventil 601. Vorzugsweise wird in einem letzten Montageschritt die Spule 617 montiert. Hierbei wird die Spule 617 orientiert und auf dem Zylinder 603 gepresst und nachher an entsprechend geeigneten Punkten nochmals seitlich verstemmt.

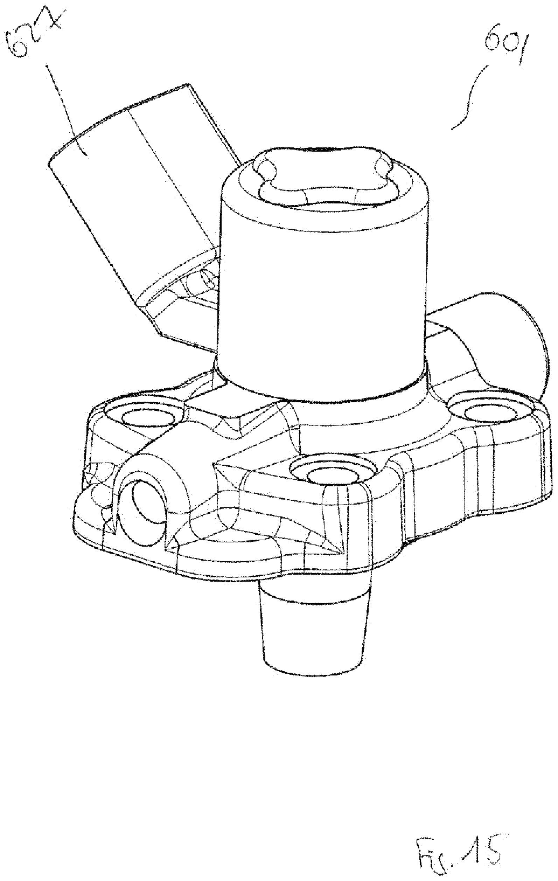

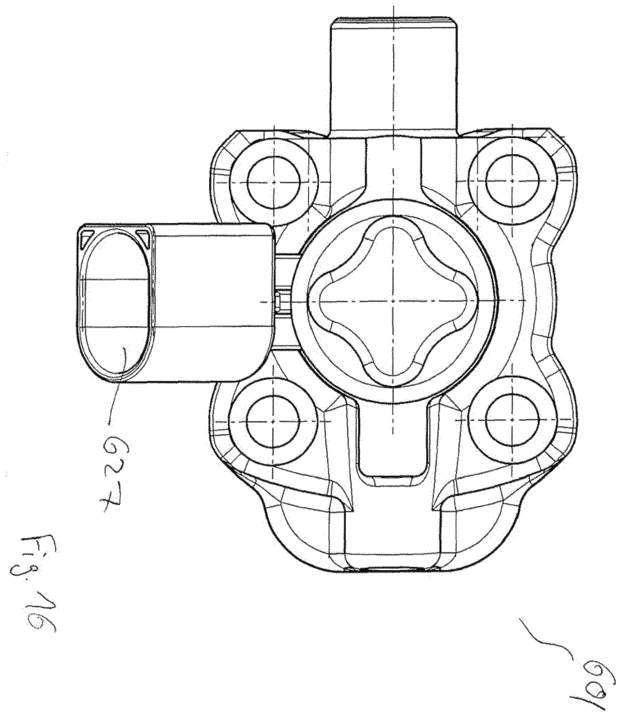

Fig. 15 und 16 zeigen verschiedene Ansichten des Einlassventils 601.

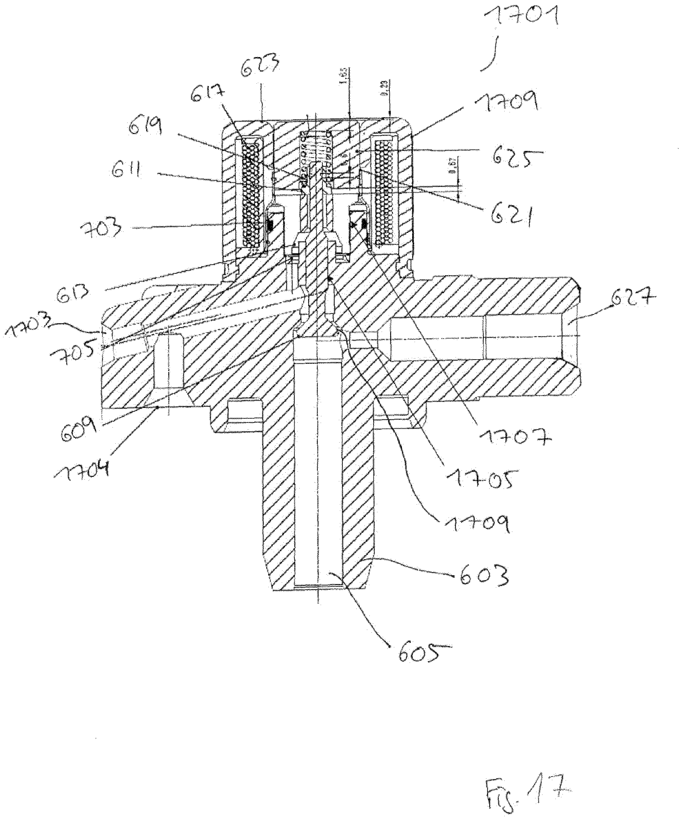

Fig. 17 zeigt ein weiteres Einlassventil 1701 für eine Fluidpumpe (nicht gezeigt). Das weitere Einlassventil 1701 weist eine Öffnung 1703 auf, welche mittels eines König-Expanders (nicht gezeigt) abgeschlossen wird. Ferner umfasst das Einlassventil 1701 eine Fluideinlassöffnung 1704, welche mittels des Stößels 609 verschlossen werden kann. Der Stößel 609 wird in einer Führung 1705 geführt, welche als eine Führungsbohrung in dem Zylinder 603 gebildet ist. Der magnetische Anker 613 wird in einer weiteren Führung 1707 geführt, welche als eine weitere Führungsbohrung in dem Zylinder 603 gebildet ist.

Bei Betätigung der Spule 617 bewegt sich der Anker 613 gegen die Federkraft der Feder 619 nach oben weg von dem Kolben 605 hierbei drückt der magnetische Anker 613 auf die Buchse 611, die mit dem Stößel 609 fest verbunden ist. Bei Betätigung der Spule 617 bewegt sich also der Stößel 609 bis zu seinem Anschlag in einem Ventilsitz 1709 des Zylinders 603.

Hierbei ist der Stößel 609 zentriert und in der Führungsbohrung 1709 geführt. Der Anker 613 ist in der weiteren Führungsbohrung 1707 des Zylinders 603 geführt.

Der Anker 613 drückt auf die Buchse 611 und kann insofern fast nur ausschließlich axiale Kräfte auf den Stößel 609 übertragen. Radiale Kräfte, insbesondere radiale Magnetkräfte, auf den Anker 613 werden also nicht auf den Stößel 609 übertragen, wodurch der Stößel 609, welcher allgemein auch als ein Regelstift bezeichnet werden kann, nicht aus dem Ventilsitz 1709 gedrückt werden kann, was in vorteilhafter Weise eine Dichtheit des Einlassventils 1701 gewährleistet.

Die in Fig. 17 gezeigten Bemaßungen in Millimetern sind auch hier nur exemplarisch zu verstehen und nicht als einschränkend.

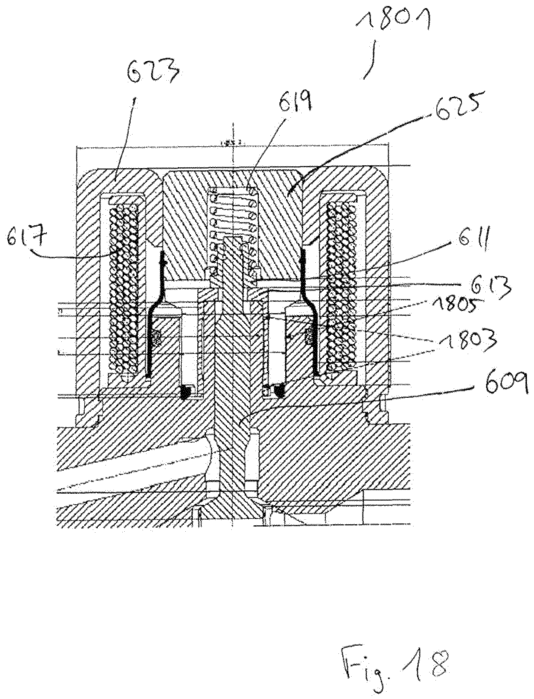

Fig. 18 zeigt ein weiteres Einlassventil 1801 für eine Fluidpumpe, wobei im Unterschied zu dem Einlassventil 1701 aus Fig. 17 der Anker 613 auf seinem Innendurchmesser geführt wird. Die Führung des Ankers 613 an seinem Innendurchmesser ist mit zwei Pfeilen mit dem Bezugszeichen 1803 gekennzeichnet.

Dadurch wird in vorteilhafter Weise eine bessere Führung des Ankers 613 ermöglicht. Ein entsprechendes Spiel am Außendurchmesser des Ankers 613 ist mit dem Bezugszeichen 1805 gekennzeichnet.

In einer nicht gezeigten Ausführungsform ist der Magnetkern aus einem anderen Werkstoff hergestellt als der Zylinder. Insbesondere wird für den Zylinder ein gut haftbarer Werkstoff gewählt. Insbesondere wird für den Magnetkern ein Werkstoff mit guten magnetischen Eigenschaften und/oder guten Schweißeigenschaften gewählt.

Aufgrund der erfindungsgemäßen radialen Entkopplung zwischen dem Anker und dem Stößel bzw. Regelstift wird das Einlassventil nicht mit hohen Drücken, bei Dieselanwendungen beträgt ein solch hoher Druck in der Regel über 2000 Bar, beaufschlagt. Diese Drücke wirken im Allgemeinem nur auf den Stößel, wobei dieser in vorteilhafter Weise durch den Zylinder gehalten bzw. geführt wird. Bei entsprechenden Schraubventilen wird eine größere Fläche mit diesem Druck belastet.

Weiterhin ist dadurch in vorteilhafter Weise ein Hub und insofern ein Durchfluss des Einlassventils besonderes einfach einstellbar. Eine Nettofederkraft ist insbesondere durch die Verschiebung der Hülse einstellbar und deshalb können in vorteilhafter Weise elektrische Schaltströme oder die Schaltzeiten "hydraulisch" eingestellt werden.

Vorteilhafterweise kann vor der Montage der Serienspule das Einlassventil komplett und einfach demontiert werden, ohne hierbei den Zylinder zu beschädigen. Insbesondere kann das Einlassventil vor dem Verschweißen der Hülse am Zylinder komplett und einfach demontiert werden, ohne hierbei den Zylinder zu beschädigen. Sollte das Ventil mit der Testspule als nicht in Ordnung geprüft werden, kann der in der Regel teure, da üblicherweise gehärtet und geschliffen, Zylinder, ohne Beschädigung wieder verwendet werden, was in vorteilhafter Weise Material einspart.

Dadurch, dass der Anker und der Stößel voneinander entkoppelt sind, dass heißt Anker und Stößel sind nicht fest verbunden, können Querkräfte auf den Anker und eine Schiefstellung des Ankers eine gute Abdichtung zwischen dem Stößel und dem Zylinder bzw. Ventilsitz nicht negativ beeinflussen. Der Stößel wird hierbei in dem Zylinder geführt. Sitz und Führung können in vorteilhafter Weise in einem gemeinsamen Bearbeitungsschritt hergestellt werden, was insbesondere eine Leckage minimiert.

## Patentansprüche

1. Einlassventil (601) für eine Fluidpumpe umfassend einen bewegbar gelagerten Stößel (609) zum Verschließen einer Fluideinlassöffnung und einen Aktor zum Verlagern des Stößels (609), wobei der Aktor und der Stößel (609) miteinander mittels eines Kopplungselements (611) zum Übertragen einer Aktorantriebskraft auf den Stößel (609) koppelbar sind, wobei der Aktor einen magnetischen Anker (613) zum Übertragen der Aktorantriebskraft auf das Kopplungselement (611) aufweist, welcher konzentrisch um den Stößel (609) angeordnet ist, wobei das Kopplungselement (611) eine mit dem Stößel (609) verbundene Buchse (611) ist, wobei ein Zylinder (603) zum Führen des Stößels (609) vorgesehen ist, **dadurch gekennzeichnet, dass** der Zylinder (603) eine Führungsbohrung (615) zum Führen des Ankers (613) aufweist, wobei der Anker (613) und der Stößel (609) derart getrennt voneinander gebildet sind, dass sie in Richtung quer zu einer Längsachse des Stößels (609) soweit voneinander beabstandet und dadurch radial entkoppelt sind, dass mittels des Aktors (613) lediglich eine in Richtung der Längsachse des Stößels (609) wirkende Aktorantriebskraft auf den Stößel (609) übertragbar ist, nicht jedoch Kräfte, die quer zur Längsachse des Stößels (609) gerichtet sind.

2. Einlassventil (601) nach Anspruch 1, wobei das Kopplungselement (611) derart gebildet ist, eine quer zu einer Längsachse des Stößels (609) wirkende Aktorkraft von dem Stößel (609) zu entkoppeln.

3. Einlassventil (601) nach einem der vorherigen Ansprüche, wobei eine Feder (619) zum Halten des Stößels (609) in einer Offenposition vorgesehen ist.

## Claims

1. An inlet valve (601) for a fluid pump, comprising a movably mounted push rod (609) for closing a fluid inlet opening, and comprising an actuator for moving the push rod (609), it being possible to couple the actuator and the push rod (609) to one another by means of a coupling element (611) for transmitting an actuator drive force to the push rod (609), the actuator comprising a magnetic armature (613) for transmitting the actuator drive force to the coupling element (611), said armature being arranged concentrically around the push rod (609), the coupling element (611) being a sleeve (611) connected to the push rod (609), a cylinder (603) for guiding the push rod (609) being provided, **characterized in that** the cylinder (603) has a guide hole (615) for guiding the armature (613), the armature (613) and the push rod (609) being formed separately from one another so as to be spaced apart from one another in a direction transverse to the longitudinal direction of the push rod (609), and thus radially decoupled, to such an extent that by means of the actuator (613), only one actuator drive force acting in the direction of the longitudinal axis of the push rod (609) is transmittable to the push rod (609), but not forces oriented transverse to the longitudinal direction of the push rod (609).

2. The inlet valve (601) according to Claim 1, wherein the coupling element (611) is formed so as to decouple from the push rod (609) an actuator force acting transverse to the longitudinal axis of the push rod (609).

3. The inlet valve (601) according to any of the preceding Claims, wherein a spring (619) for holding the push rod (609) in an open position is provided.

## Revendications

1. Clapet d'aspiration (601) pour une pompe à fluide comprenant un poussoir (609) monté de façon mobile pour la fermeture d'une ouverture d'aspiration de fluide et un actionneur pour le déplacement du poussoir (609),
l'actionneur et le poussoir (609) pouvant être couplés l'un à l'autre au moyen d'un élément de couplage (611) pour la transmission d'une force motrice d'actionneur au poussoir (609),
l'actionneur présentant une ancre magnétique (613) pour la transmission de la force motrice d'actionneur à l'élément de couplage (611), lequel est disposé de façon concentrique autour du poussoir (609),
l'élément de couplage (611) étant une douille (611) reliée au poussoir (609),
un cylindre (603) étant prévu pour le guidage du poussoir (609),
**caractérisé en ce que**
le cylindre (603) présente un alésage de guidage (615) pour le guidage de l'ancre (613),
l'ancre (613) et le poussoir (609) étant formés en étant séparés l'un de l'autre de telle sorte qu'ils sont à une telle distance l'un de l'autre dans une direction transversale à un axe longitudinal du poussoir (609), et de ce fait découplés radialement, qu'au moyen de l'actionneur (613) seule une force motrice d'actionneur agissant dans la direction de l'axe longitudinal du poussoir (609) peut être transmise au poussoir (609), et non les forces qui sont orientées transversalement à l'axe longitudinal du poussoir (609).

2. Clapet d'aspiration (601) selon la revendication 1,
l'élément de couplage (611) étant formé afin de découpler du poussoir (609) une force d'actionneur agissant transversalement à l'axe longitudinal du poussoir (609).

3. Clapet d'aspiration (601) selon l'une quelconque des revendications précédentes,
un ressort (619) étant prévu pour maintenir le poussoir (609) dans une position ouverte.
